**Europäisches Patentamt**

**European Patent Office**

**Office européen des brevets**

(19)

(11) Veröffentlichungsnummer: **0 028 405**
**B1**

(12) **EUROPÄISCHE PATENTSCHRIFT**

(45) Veröffentlichungstag der Patentschrift:
**30.05.84**

(51) Int. Cl.³: **H 04 L 25/49**

(21) Anmeldenummer: **80106680.4**

(22) Anmeldetag: **30.10.80**

(54) **Verfahren und Anordnung zur Jitterreduzierung bei der blockweisen Umcodierung digitaler Signale.**

(30) Priorität: **02.11.79 DE 2944377**

(43) Veröffentlichungstag der Anmeldung:
**13.05.81 Patentblatt 81/19**

(45) Bekanntmachung des Hinweises auf die Patenterteilung:
**30.05.84 Patentblatt 84/22**

(84) Benannte Vertragsstaaten:
**AT BE CH DE FR GB IT LI NL SE**

(56) Entgegenhaltungen:
**US - A - 3 611 141**

**CABLES & TRANSMISSION, Band 32, Nr. 2, April 1978,
Seiten 278-338, Paris FR., J.M. CAMBORDE et
al.:"Equipements de ligne pour système de transmission
à 140 Mbit/s sur cables à paires coaxiales"
POST OFFICE ELECTRICAL ENGINEERS JOURNAL,
Band 69, Teil 4, 1977, Seiten 217-224, London, G.B., M.J.
SCHICKNER et al.:"Development of a 120 Mbit/s digital
line system; Part 2 - Equipment Description"**

(73) Patentinhaber: **SIEMENS AKTIENGESELLSCHAFT,
Berlin und München Wittelsbacherplatz 2,
D-8000 München 2 (DE)**

(72) Erfinder: **Kühne, Friedrich, Dipl.-Ing.,
Gabriele-Münter-Strasse 21, D-8000 München 71 (DE)**
Erfinder: **Dömer, Josef, Ing. grad., Flossgatter 18,
D-8021 Hohenschäftlarn (DE)**
Erfinder: **Kahn, Klaus-Dieter, Dipl.-Ing.,
Klobensteinerstrasse 32, D-8000 München 90 (DE)**

## Beschreibung

Die Erfindung betrifft ein Verfahren zur Jitterreduzierung bei der blockweisen Umcodierung digitaler Signale, bei der die umzucodierenden Signale mittels einer Serien-Parallel-Wandlung in Signalblöcke umgewandelt, diese umcodiert und die umcodierten Signalblöcke nach einer Parallel-Serien-Wandlung abgegeben werden, bei dem eine Speicherung erfolgt und bei dem die Serien-Parallel-Wandlung von einem ersten Worttakt des umzucodierenden Signals und die Parallel-Serien-Wandlung von einem zweiten Worttakt gesteuert wird, der vom ersten abgeleitet ist, und eine Anordnung zur Durchführung dieses Verfahrens.

Die Übertragung digitaler Signale, die beispielsweise als PCM-Signale vorliegen, erfolgt mittels Impulsen, die in einem festen Zeitraster ausgesendet werden. Während der Übertragung dieser Impulse, beispielsweise über eine Kabelstrecke, erfolgt eine Veränderung der Impulse hinsichtlich deren Amplitude, deren Dauer und deren Lage im zeitlichen Raster. Im Hinblick auf diese Veränderung der Impulse sind in die Übertragungsstrecke in gewissen Abständen Regeneratoren eingefügt, in denen die Impulse amplituden- und zeitmässig regeneriert werden. Für die zeitliche Regenerierung der Impulse wird ein im Regenerator erzeugtes Taktsignal verwendet. Dieses Taktsignal kann mittels einer passiven Anordnung, beispielsweise einer Schwungradschaltung, oder mittels einer Phasenregelschleife aus dem empfangenen Signal abgeleitet werden. Die Schaltungsanordnungen zur Taktableitung haben dabei die Funktion eines auf die Taktfrequenz abgestimmten Bandfilters, eine Taktableitung ist also nur gewährleistet, so lange die Phasenschwankungen im empfangenen Signal ein bestimmtes Mass nicht überschreiten. Ausserdem hat eine derartige Schaltung zur Taktableitung in ihrer Funktion als Bandfilter nur eine bestimmte, endliche Güte, so dass bei grösseren Phasenschwankungen, also bei grösserem Jitter des empfangenen Signals, auch das abgeleitete Taktsignal ein gewisses Mass an Jitter aufweist.

Eine Regenerierung der empfangenen Signale erfolgt nicht nur auf der Übertragungsstrecke, sondern auch in den Leitungsendgeräten an den beiden Streckenenden. Dort ist die Regenerierung besonders kritisch, da in den Leitungsendgeräten meist noch eine Umsetzung der digitalen Signale in einen bestimmten Streckencode bzw. eine Rückumsetzung erfolgt und stark verjitterte Signale zu Fehlern bei der Umcodierung führen können.

Aus der US-PS 3 611 141 ist eine Endeinrichtung zur Datenübertragung bekannt, bei der eine blockweise Umcodierung digitaler Signale erfolgt und die Signale dazu sendeseitig ein Schieberegister durchlaufen, zwischen dessen einzelne Stufenausgänge und die Eingänge des Umcodierers ein Speicher geschaltet ist, der mit einem aus dem Bittakt der ankommenden digitalen Signale phasenstarr erzeugten Worttakt betrieben wird. Durch die Kombination des Schieberegisters in Verbindung mit dem Speicher erfolgt die Serien-Parallelumsetzung und die wortweise Übergabe der Signale an den Codeumsetzer. Empfangsseitig ist mit den Ausgängen des Codeumsetzers ein Zwischenspeicher verbunden, der ebenfalls mit dem Worttakt der abzugebenden Signale betrieben wird und der die vom Codeumsetzer erzeugten Signale wortweise an ein mit dem Bittakt dieser Signale betriebenes Schieberegister weiterleitet. Die Kombination aus Schieberegister und Speicher entspricht damit bekannten Serien-Parallel-Wandlern bzw. Parallel-Serien-Wandlern.

Aus dem Post Office Elektrical Engineers Journal, Band 69, Teil 4, 1977, Seiten 217 bis 224, ist ein digitales Übertragungssystem für eine Übertragungsgeschwindigkeit von 120 Mbit/s mit den Merkmalen des Oberbegriffs des Anspruchs 1 bekannt, das empfangsseitig eine Anordnung zur Jitterreduzierung enthalten kann. Diese Anordnung kann im bitseriellen Weg vor dem eigentlichen Umsetzer, nach diesem und auch parallel zu diesem angeordnet sein, sie enthält einen Pufferspeicher mit einem Schreib- und einem Lesetakt, wobei der Lesetakt mit Hilfe einer Phasenregelschleife aus dem Schreibtakt erzeugt wird. Die Verwendung von Pufferspeichern führt zu einem erheblichen Aufwand bei der Jitterreduzierung, insbesondere bei den betrachteten Signalgeschwindigkeiten.

Die Aufgabe der Erfindung besteht nun darin, ein Verfahren zur Jitterreduzierung bei der blockweisen Umcodierung digitaler Signale anzugeben, das mit möglichst geringem Aufwand realisierbar ist und das im Hinblick auf die steigenden Anforderungen an die Übertragungsgeschwindigkeit auch bei Bitraten von über 10 Mbit/s einsetzbar ist.

Erfindungsgemäss wird die Aufgabe dadurch gelöst, dass zwischen Serien-Parallel- und Parallel-Serien-Wandlung zusätzlich zur Umcodierung eine Zwischenspeicherung der Signalblöcke mit einem Worttakt erfolgt, der, falls die Zwischenspeicherung vor der Umcodierung erfolgt, dem zweiten abgeleiteten Worttakt und, falls die Zwischenspeicherung nach der Umcodierung erfolgt, dem Worttakt der umzucodierenden Signale entspricht, und dass der abgeleitete Worttakt mittels einer einen Phasendiskriminator und einen Generator enthaltenden Phasenregelschleife hoher Güte erzeugt wird.

Eine bevorzugte Variante des erfindungsgemässen Verfahrens macht von den bei der Umcodierung auftretenden unterschiedlich langen Signalblöcken dadurch Gebrauch, dass jeweils der kürzere Signalblock zwischengespeichert wird.

Im Hinblick auf die Möglichkeit, ternäre Signale in Form zweier unipolarer Signale zu verarbeiten, ist eine Variante des erfindungsgemässen Verfahrens zweckmässig, bei der die Signale entsprechend einer 4B/3T-Codevorschrift umgewandelt werden und dabei die binären Signale zwischengespeichert und die ternären Signale in zwei unipolare Signalströme aufgeteilt werden.

Zweckmässige Anordnungen zur Durchführung des erfindungsgemässen Verfahrens sind in den Patentansprüchen 4 bis 6 näher beschrieben.

Die Erfindung soll im folgenden anhand der Zeichnung näher erläutert werden. In der Zeichnung zeigen:

Fig. 1 das Blockschaltbild des Leitungsendgerätes einer digitalen Übertragungsstrecke,

Fig. 2 das Blockschaltbild eines Codeumsetzers,

Fig. 3 ein Impulsdiagramm zum Codeumsetzer nach Fig. 2,

Fig. 4 ein detailliertes Blockschaltbild eines Teils eines sendeseitig angeordneten Leitungsendgerätes und

Fig. 5 ein detailliertes Blockschaltbild eines Teils eines empfangsseitig angeordneten Leitungsendgerätes.

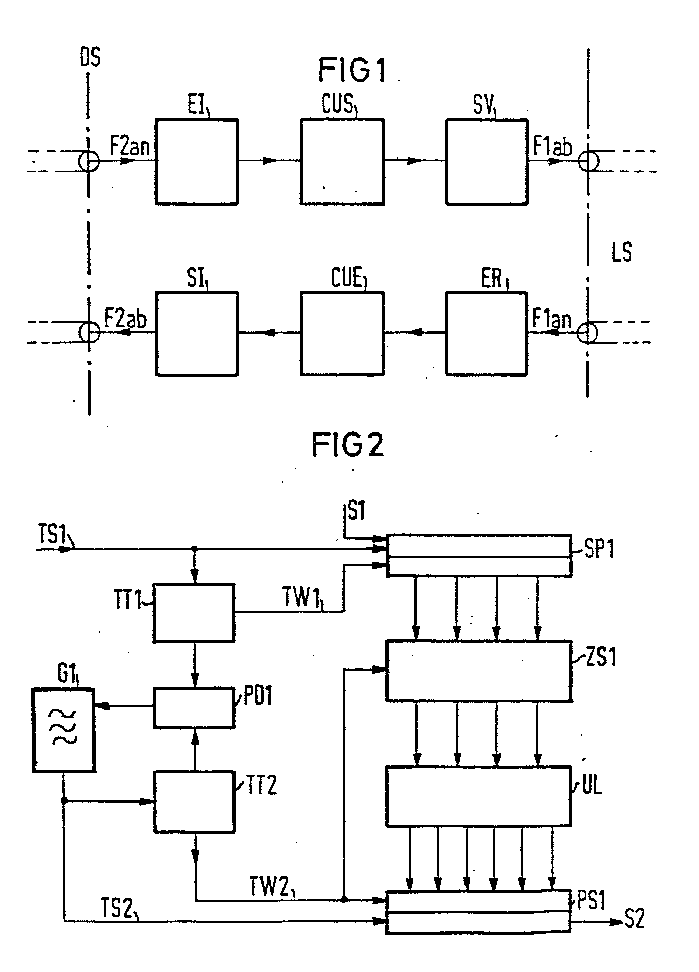

Das in der Fig. 1 dargestellte Leitungsendgerät enthält im Anschluss an eine digitale Schnittstelle DS einen Sendeteil mit einem Empfangsinterface EI, einem sendeseitigen Codeumsetzer CUS und einem Sendeverstärker SV, dessen Ausgang über einen Anschluss F1ab an eine Leitungsschnittstelle LS angeschlossen ist. Der Empfangsteil des Leitungsendgerätes enthält einen über den Anschluss F1an an die Leitungsschnittstelle angeschlossenen Endregenerator ER, einen an dessen Ausgangsanschluss angeschlossenen empfangsseitigen Codeumsetzer CUE und ein Sendeinterface SI, dessen Ausgang über den Anschluss F2ab an die digitale Schnittstelle angeschlossen ist.

Bei der digitalen Schnittstelle und der Leitungsschnittstelle handelt es sich um Übergänge, an denen genormte Signale anstehen. Durch den sendeseitigen Codeumsetzer wird das an der digitalen Schnittstelle DS aufgenommene Signal in ein Signal umgewandelt, das der an der Leitungsschnittstelle LS vorgeschriebenen Norm entspricht. Zu diesem Zweck wird das am Anschluss F2an ankommende Signal im Empfangsinterface EI zunächst entzerrt, dann regeneriert, falls erforderlich auch verwürfelt, und dann dem sendeseitigen Codeumsetzer CUS zugeführt. In diesem Codeumsetzer erfolgt eine Umformung in ein Signal mit einem sogenannten «Leitungscode», die 4B/3T-Umformung stellt einen derartigen Fall dar. Nach der Codeumsetzung wird das Signal im Sendeverstärker SV verstärkt und über den Anschluss F1ab an die Leitungsstrecke abgegeben, die dem Anfang des Übertragungskabels entspricht.

In der Gegenrichtung entspricht die Leitungsschnittstelle LS dem Ende des entsprechenden Übertragungskabels mit dem Anschluss F1an. Das von der Leitung kommende Signal wird im Endregenerator ER entzerrt, amplituden- und zeitmässig regeneriert und dem empfangsseitigen Codeumsetzer CUE zugeführt, in den das Signal vom Leitungscode wieder in den Schnittstellencode zurückgewandelt wird. Im nachgeschalteten Sendeinterface SI wird das für die digitale Schnittstelle vorgeschriebene Signal gebildet.

Im Hinblick auf eine möglichst gute Jitterverträglichkeit der digitalen Übertragungsstrecke ist im Empfangsinterface EI ein Regenerator enthalten, der auch bei stark verjitterten Signalen diese noch wirksam regenerieren kann. Ein derartig ausgebildeter Regenerator gibt zwangsläufig wegen seiner relativ niedrigen Güte im Taktrückgewinnungskreis noch einen beträchtlichen Anteil an Jitter weiter, der dann im nachgeschalteten Codeumsetzer CUS stark reduziert wird, so dass nur ein sehr gering mit Jitter behaftetes Signal an die Übertragungsstrecke abgegeben wird. Entsprechend ist empfangsseitig der Empfangsregenerator ER so ausgebildet, dass dieser ein stark verjittertes Signal aufnehmen und an den empfangsseitigen Codeumsetzer CUE abgeben kann.

Das in der Fig. 2 dargestellte Blockschaltbild zeigt einen Codeumsetzer, der als sendeseitiger Codeumsetzer CUS oder als empfangsseitiger Codeumsetzer CUE in das Leitungsendgerät nach der Fig. 1 einsetzbar ist. Der Codeumsetzer nach der Fig. 2 dient dazu, einen beispielsweise einem Codewort entsprechenden Signalblock von einem Code in den anderen umzusetzen. Zu diesem Zweck müssen der dafür vorgesehenen Umcodierlogik UL die Signale block- oder wortweise zugeführt und von ihr abgenommen werden.

Zur Umwandlung der ankommenden Signale dient ein erster Serien-Parallel-Wandler SP1 mit einem Eingang für ein umzuwandelndes Signal S1 und mehreren Ausgängen, an denen die einzelnen Codeelemente eines Signalblockes gleichzeitig abgenommen werden können. Während beim Stand der Technik diese Ausgänge direkt mit entsprechenden Eingängen der Umcodierlogik UL verbunden sind, sind bei der vorliegenden Anordnung nach der Erfindung die einzelnen Ausgänge des ersten Serien-Parallel-Wandlers SP1 mit entsprechenden Eingängen eines Zwischenspeichers ZS1 verbunden. Dieser Zwischenspeicher verfügt über eine gleiche Anzahl Ausgänge, an denen der zwischengespeicherte Signalblock zu einem bestimmten Zeitpunkt abgerufen und in die Umcodierlogik UL übertragen werden kann. Die Anzahl der Eingänge der Umcodierlogik entspricht dabei der Anzahl der Codeelemente eines Signalblockes des umzuformenden Signals S1, während die Anzahl der parallelen Ausgänge der Umcodierlogik der Anzahl der Codeelemente des umgeformten Signals S2 entspricht. Die Ausgänge der Umcodierlogik sind mit den Eingängen eines Parallel-Serien-Wandlers PS1 verbunden, an dessen Ausgang das umgewandelte Signal S2 entnehmbar ist. Zur Erzeugung der verschiedenen benötigten Taktsignale dient eine Taktrückgewinnungsschaltung in Form einer Phasenregelschleife mit einem ersten Taktgenerator G1 und einem ersten Phasendiskriminator PD1.

Vom Empfangsinterface bzw. vom Empfangsregenerator wird ein erstes Taktsignal TS1 erzeugt, das dem Bittakt des umzuformenden Signals S1 entspricht und dem Bittakteingang des Serien-Parallel-Wandlers SP1 und dem Eingang eines ersten Frequenzteilers TT1 zugeführt wird. Durch den ersten Frequenzteiler TT1 wird aus dem Bittaktsignal TS1 das Worttaktsignal TW1 erzeugt und dem Worttakteingang des Serien-Parallel-Wandlers SP1 und einem ersten Signaleingang des Phasendiskriminators PD1 zugeführt. Das Teilerverhältnis des ersten Frequenzteilers TT1 entspricht der Anzahl der Codeelemente pro Signalblock im umzuformenden Signal S1. Vom Generator G1 wird ein zweites Taktsignal TS2 erzeugt, das dem Takt der Codeelemente des umgeformten Signals S2 entspricht und dem entsprechenden Takteingang des Parallel-Serien-Wandlers PS1 zugeführt wird. Aus diesem Signal wird mittels eines zweiten Frequenzteilers TT2 das Worttaktsignal TW2 des umgeformten Signals S2 erzeugt und dem Worttakteingang des Parallel-Serien-Wandlers PS1, einem weiteren Signaleingang des Phasendiskriminators PD1 und einem Takteingang des Zwischenspeichers ZS1 zugeführt.

Der Generator G1 wird durch den Phasendiskriminator PD1 nachgesteuert. Das Teilerverhältnis des zweiten Frequenzteilers TT2 entspricht der Anzahl der Codeelemente pro Signalblock im umgeformten Signal S2.

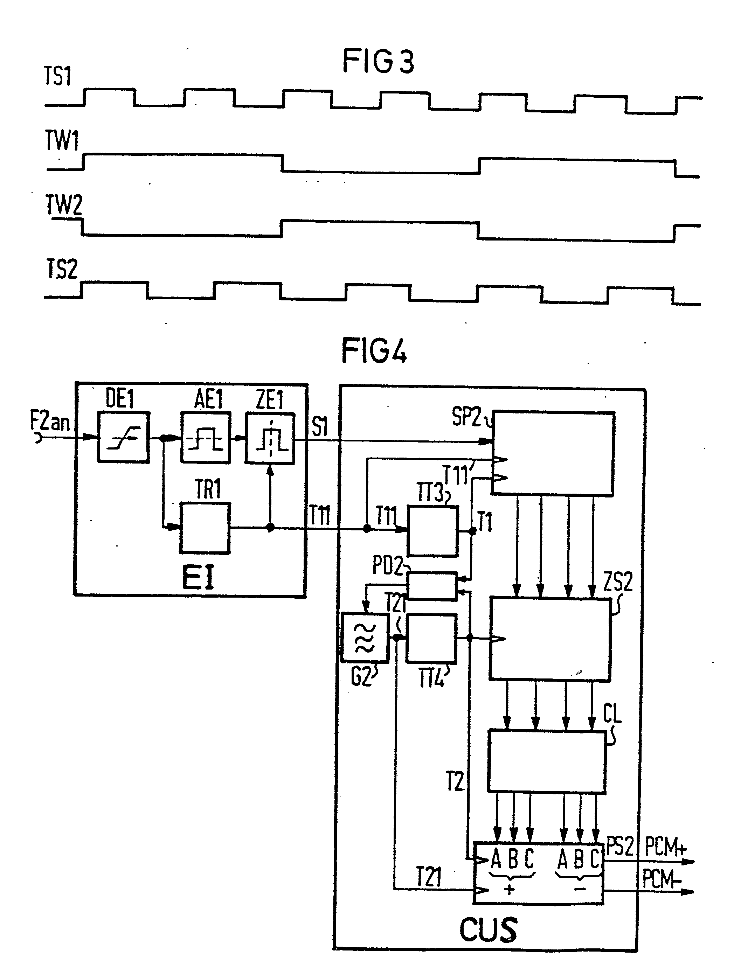

Für den Fall einer 4B/3T-Umwandlung zeigt die Fig. 3 ein Impulsdiagramm mit den dabei auftretenden Taktsignalen. Das Taktsignal TS1 entspricht in diesem Falle dem Bittaktsignal des umzuformenden Signals S1, während das Signal TW1 das entsprechende Worttaktsignal darstellt. Dabei ist angenommen, dass das entsprechende Wort bzw. der Signalblock aus vier einzelnen Codeelementen, in diesem Falle also Bits, besteht. Da die ternären Codeblöcke von der Umcodierlogik UL mit der gleichen Frequenz abgegeben werden, mit der diese die binären Codeblöcke aufnimmt, entspricht der Worttakt des umgeformten Signals S2, in diesem Falle also das Worttaktsignal TW2 des ternären Signals, in seiner Frequenz dem Worttaktsignal TW1. Während in der Fig. 3 das Worttaktsignal TW2 sich an die entsprechende Phase des Worttaktsignals TW1 anschliesst, können im Betrieb aufgrund der Phasenschwankungen im empfangenen Signal entsprechende Verschiebungen auftreten. Der Zwischenspeicher kann dadurch Phasenschwankungen aufnehmen, die Laufzeitschwankungen nahezu von der Dauer eines Signalblockes entsprechen.

Eine erste Anwendung des Codeumsetzers nach der Fig. 2 ist im detaillierten Blockschaltbild der Fig. 4 näher erläutert, in der die Sendeseite eines Leitungsendgerätes, allerdings ohne Sendeverstärker, dargestellt ist. Zur Aufnahme des von der digitalen Schnittstelle DS abgegebenen Signals dient ein Empfangsinterface EI, das einen Dämpfungsentzerrer DE1, einen diesem nachgeschalteten Amplitudenentscheider AE1, einen mit dessen Ausgang verbundenen Zeitentscheider ZS1 und eine Taktrückgewinnungsschaltung TR1 enthält. Durch das Empfangsinterface EI wird ein amplituden- und zeitmässig regeneriertes Signal erzeugt, das das umzucodierende Signal S1 für den sendeseitigen Codeumsetzer CUS darstellt. Zusätzlich wird vom Empfangsinterface der Bittakt dieses Signals erzeugt und als Bittaktsignal T11 einem entsprechenden Eingang des Codeumsetzers CUS zugeführt.

Im ersten Codeumsetzer CUS soll eine 4B/3T-Umwandlung des Signals S1 vorgenommen werden. Zu diesem Zweck enthält der Codeumsetzer CUS einen eingangsseitigen vierstufigen Serien-Parallel-Wandler SP2 mit vier parallelen Ausgängen, einen Zwischenspeicher ZS2 mit vier parallelen Eingängen und vier parallelen Ausgängen, eine Codierlogik CL mit vier parallelen Eingängen und sechs parallelen Ausgängen und einen Parallel-Serien-Wandler PS2 mit sechs parallelen Eingängen und zwei parallelen Ausgängen sowie einen Schaltungsteil zur Taktrückgewinnung. Dieser Schaltungsteil enthält einen Frequenzteiler TT3, dessen Eingang mit dem Ausgang des Empfangsinterfaces EI für das Taktsignal T11 verbunden ist und an dessen Ausgang der Worttakteingang des Serien-Parallel-Wandlers SP2 und ein erster Signaleingang eines Phasendiskriminators PD2 angeschlossen ist. An den Ausgang dieses Phasendiskriminators ist der Steuereingang eines Taktgenerators G2 angeschlossen, dessen Ausgang für das Taktsignal T21 mit einem Eingang eines Frequenzteilers TT4 und einem Schrittakteingang des Parallel-Serien-Wandlers PS2 verbunden ist. Der Ausgang des Frequenzteilers TT4 ist sowohl mit einem Worttakteingang des Parallel-Serien-Wandlers PS2, einem Takteingang des Zwischenspeichers ZS2 und einem weiteren Signaleingang des Phasendiskriminators PD2 verbunden. Der Anschluss für das Taktsignal T11 des Codeumsetzers CU1 ist ausserdem mit dem Schrittakteingang des Serien-Parallel-Wandlers SP2 verbunden. Das Teilerverhältnis des Frequenzteilers TT3 ist mit 4 : 1 gewählt, so dass dadurch das Worttaktsignal T1 des umzuformenden Signals erzeugt wird.

Entsprechend der 4B/3T-Umwandlung ist die Frequenz des vom Generator G2 abgegebenen Taktsignals T21, das als Taktsignal für die ternären Codeelemente dient, nur ¾ der Frequenz des Bittaktsignals T11. Zur Erzeugung des Worttaktsignals T2 der ternären Ausgangssignale dient der Frequenzteiler TT4 mit einem Teilerverhältnis 3 : 1. Dadurch entspricht die Frequenz des Worttaktsignals T2 der Frequenz des Worttaktsignals T1, die entsprechenden Worttaktsignale sind jedoch aufgrund auftretenden Jitters zueinander phasenverschoben. Das zweite Worttaktsignal wird dem Takteingang des Zwischenspeichers ZS1 und einem Vergleichssignaleingang des Phasendiskriminators PD2 zugeführt. Während also die Signalblöcke an den Ausgängen des Serien-Parallel-Wandlers SP2 mit dem Worttakt T1 auftreten, werden sie vom Zwischenspeicher ZS2 an die Codierlogik entsprechend dem Worttaktsignal T2 abgegeben. Die Codierlogik enthält im vorliegenden Falle sechs Ausgänge, die mit entsprechenden Eingängen des Serien-Parallel-Wandlers PS2 verbunden sind. Diese verdoppelte Anzahl der Ausgänge wurde im Hinblick auf eine einfache Verarbeitung der ternären Signale gewählt. Wegen der Schwierigkeiten mit einer ternären Logik wurde im vorliegenden Falle das ternäre Signal in zwei unipolare Impulszüge aufgespalten, die jeweils den Impulsen der einen Polarität des eigentlichen ternären Signals entsprechen. Vom Parallel-Serien-Wandler PS2 werden diese beiden unipolaren Impulszüge getrennt voneinander dem Sendeverstärker zugeführt, der beispielsweise als Gegentaktverstärker zur Aufnahme dieser Signale eingerichtet ist.

Im Hinblick auf eine Verarbeitung von Signalen mit grossem Jitter in diesem Teil des Leitungsendgerätes wurde die Taktrückgewinnungsschaltung TR1 mit vergleichsweise niedriger Güte, damit aber mit vergleichsweise guter Regenerierfähigkeit gewählt. Dadurch weist sowohl das umzucodierende Signal S1 als auch das entsprechende Taktsignal T11 noch erhebliche Phasenschwankungen auf. Diese Phasenschwankungen treten auch noch beim Ausgangssignal des Serien-Parallel-Wandlers SP2 auf. Die Übertragung des zwischengespeicherten Signals erfolgt mit dem Worttaktsignal T2, das durch die aus dem Phasendiskriminator PD2 und dem Generator G2 gebildete Phasenregelschleife vergleichsweise hoher Güte mit nachgeschaltetem Frequenzteiler erzeugt wird. Die Phasenschwankungen des Worttaktsignals T2 sind dementsprechend zu vernachlässigen.

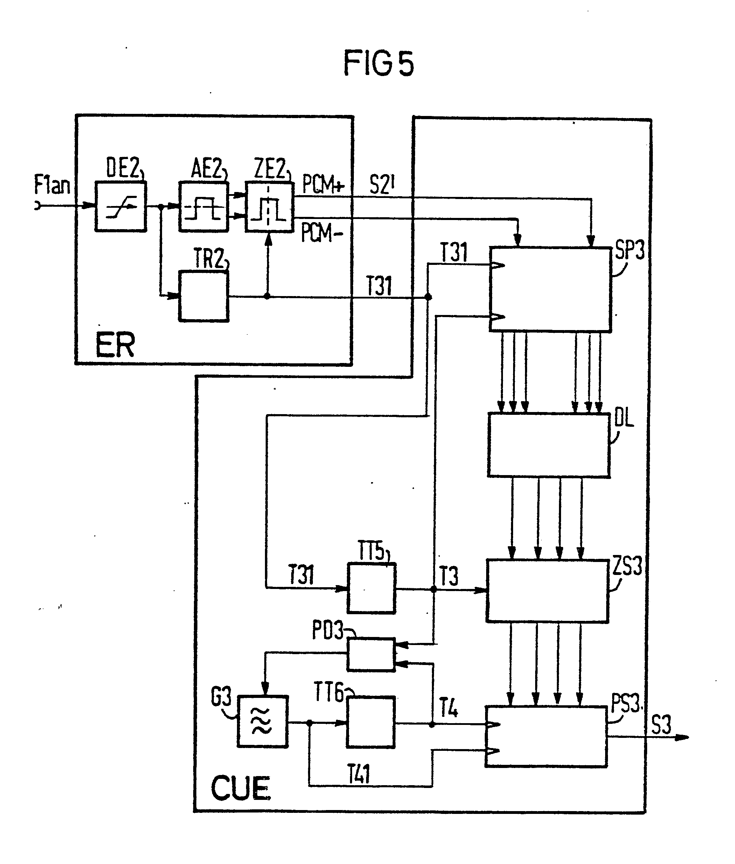

Nach Durchlaufen der Übertragungsstrecke gelangen die zu übertragenden Signale schliesslich zum empfangsseitigen Leitungsendgerät, dessen interessierender Teil in der Fig. 5 dargestellt ist. Empfangsseitig enthält dieses Leitungsendgerät einen mit dem Streckenanschluss F1an verbundenen Endregenerator ER, der einen Dämpfungsentzerrer DE2, eine mit dessen Ausgang verbundenen Taktrückgewinnungsschaltung TR2, ausserdem einen Amplitudenentscheider AE2 und einen Zeitentscheider ZW2 enthält. Aufbau und Funktion des Empfangsregenerators entsprechen weitgehend dem in der Fig. 4 dargestellten Empfangsinterface EI, im Hinblick auf die übertragenen ternären Signale enthält der Zeitentscheider jedoch zwei Ausgänge für die beiden unipolaren Impulszüge, die den Impulsen jeweils einer Polarität des ternären Übertragungssignals entsprechen. Beide Ausgangsanschlüsse des Zeitentscheiders ZS2 sind mit entsprechenden Eingangsanschlüssen eines Serien-Parallel-Wandlers SP3 verbunden, der ausserdem einen Anschluss für den entsprechenden Schrittakt T31, den entsprechenden Worttakt T3 und über sechs Ausgänge zur parallelen Abgabe der unipolaren Impulse verfügt. Aus dem von der Taktrückgewinnungsschaltung TR2 im Endregenerator ER erzeugten Schrittaktsignal T31 wird im empfangsseitigen Codeumsetzer CUE mittels eines Frequenzteilers TT5 mit einem Teilerverhältnis von 3 : 1 das entsprechende Worttaktsignal T3 erzeugt, das neben dem Serien-Parallel-Wandler SP3 einem Zwischenspeicher ZS3 und einem Phasendiskriminator PD3 zugeführt wird. Entsprechend dem Aufbau einer Phasenregelschleife ist mit dem Steuerausgang des Phasendiskriminators PD3 der Steuereingang eines Generators G3 verbunden, der ein Taktsignal T41 entsprechend dem Bittakt des umgeformten Signals S3 erzeugt. Im Hinblick auf die Ternär-Binär-Umwandlung ist dabei die Schwingfrequenz des Generators G3 4/3 der Taktfrequenz T31 der ternären Signale. Aus dem Ausgangssignal des Generators T3 wird mittels eines Frequenzteilers TT6 mit einem Teilerverhältnis 4 : 1 ein neues binäres Worttaktsignal T4 erzeugt, das einem Worttakteingang des Parallel-Serien-Wandlers PS3 und einem weiteren Signaleingang des Phasendiskriminators PD3 zugeführt wird.

Mit den sechs Ausgängen des Serien-Parallel-Wandlers SP3 sind entsprechende Eingänge einer Decodierlogik DL verbunden, durch die die ternären Signale in binäre Signale umgewandelt werden. Der Zwischenspeicher ZS3 ist in diesem Falle der Decodierlogik DL nachgeschaltet, da die von der Decodierlogik DL erzeugten binären Signale jeweils aus vier Bit bestehen und dadurch mit geringerem Aufwand zwischengespeichert werden können. Der Zwischenspeicher ZS3 wird mit dem mittels des Frequenzteilers TT5 aus dem Empfangstaktsignal T31 erzeugten Worttaktsignal T3 gespeist. Dadurch schwanken also die im Serien-Parallel-Wandler SP3, in der Decodierlogik DL und im Zwischenspeicher ZS3 befindlichen Signale mit einem Restjitter, mit dem der Zeitentscheider ZE2 diese Signale an den zweiten Codeumsetzer CU2 abgibt. Die eigentliche dynamische Schnittstelle zwischen jitterbehaftetem und jitterreduziertem Signal befindet sich also in diesem Falle zwischen dem Zwischenspeicher ZS3 und dem Parallel-Serien-Wandler PS3, da letzterer mit dem Worttaktsignal T4 beaufschlagt ist, das mittels einer aus dem Phasendiskriminator PD3 und dem Generator G3 gebildeten Phasenregelschleife hoher Güte erzeugt wurde.

Natürlich könnte der Zwischenspeicher und damit die dynamische Schnittstelle zwischen jitterbehaftetem und jitterreduziertem Signal auch zwischen Serien-Parallel-Wandler SP3 und Decodierlogik DL angeordnet werden. In diesem Falle müsste der Zwischenspeicher ZS3 aber über zwei weitere Speicherplätze verfügen.

**Patentansprüche**

1. Verfahren zur Jitterreduzierung bei der blockweisen Umcodierung digitaler Signale, bei der die umzucodierenden Signale mittels einer Serien-Parallel-Wandlung in Signalblöcke umgewandelt, diese umcodiert und die umcodierten Signalblöcke nach einer Parallel-Serien-Wandlung abgegeben werden, bei dem eine Speicherung erfolgt und bei dem die Serien-Parallel-Wandlung von einem ersten Worttakt des umzucodierenden Signals und die Parallel-Serien-Wandlung von einem zweiten Worttakt gesteuert wird, der vom ersten abgeleitet ist, dadurch gekennzeichnet, dass zwischen Serien-Parallel- und Parallel-Serien-Wandlung zusätzlich zur Umcodierung eine Zwischenspeicherung der Signalblöcke mit einem Worttakt erfolgt, der, falls die Zwischenspeicherung vor der Umcodierung erfolgt, dem zweiten abgeleiteten Worttakt (TW2, T2, T4) und, falls die Zwischenspeicherung nach der Umcodierung erfolgt, dem Worttakt (TW1, T1, T3) der umzucodierenden Signale (S1) entspricht, und dass der abgeleitete Worttakt (TW2, T2, T4) mittels einer einen Phasendiskriminator (PD1, PD2, PD3) und einen Generator (G1, G2, G3) enthaltenden Phasenregelschleife hoher Güte erzeugt wird.

2. Verfahren nach Anspruch 1, dadurch gekennzeichnet, dass der kürzere Signalblock zwischengespeichert wird.

3. Verfahren nach Anspruch 1 oder 2, dadurch gekennzeichnet, dass die Signale (S1) entsprechend einer 4B/3T-Codevorschrift umgewandelt werden und dabei die binären Signale zwischengespeichert und die ternären Signale in zwei unipolare Signalströme aufgeteilt werden.

4. Anordnung zur Durchführung des Verfahrens nach den Patentansprüchen 1 bis 3 für eine An/ Bm-Umcodierung eines digitalen Signals, dadurch gekennzeichnet, dass ein eingangsseitiger Serien-Parallel-Wandler (SP1) mit einem Eingang für das umzucodierende Signal (S1), einem Eingang für dessen Schrittaktsignal (TS1), einem Eingang für dessen Worttaktsignal (TW1) und mit n parallelen Ausgängen vorgesehen ist, dass diese Ausgänge mit n parallelen Eingängen eines Zwischenspeichers (ZS1) verbunden sind, an dessen n parallele Ausgänge n parallele Eingänge einer Umcodierlogik (UL) angeschlossen sind, dass die Umcodierlogik m parallele Ausgänge hat, an die die entsprechende Anzahl paralleler Eingänge eines Parallel-Serien-Wandlers (PS1) angeschlossen ist, an dessen Ausgang das umcodierte und jitterreduzierte Signal (S2) entnehmbar ist, dass aus dem Schrittaktsignal (TS1) des umzucodierenden Signals mittels eines ersten Frequenzteilers (TT1) das Worttaktsignal (TW1) abgeleitet ist, das zusätzlich einem Phasendiskriminator (PD1) zugeführt ist, an dessen Steuerausgang der Steuereingang eines Taktgenerators (G1) angeschlossen ist, dessen Ausgang mit einem Eingang des Parallel-Serien-Wandlers (PS1) für das Schrittaktsignal (TS2) des umcodierten Signals (S2) und mit einem zweiten Frequenzteiler (TT2) verbunden ist, an dessen Ausgang der Eingang des Parallel-Serien-Wandlers (PS1) für das Worttaktsignal (TW2) des umcodierten Signals (S2), der Eingang des Phasendiskriminators (PD1) für das Vergleichssignal und der Takteingang des Zwischenspeichers (ZS1) angeschlossen ist (Fig. 2).

5. Anordnung nach Patentanspruch 4, dadurch gekennzeichnet, dass für eine 4B/3T-Codierung der eingangsseitige Serien-Parallel-Wandler (SP2) vier Stufen, der ausgangsseitige Parallel-Serien-Wandler (PS2) sechs Stufen, der Zwischenspeicher (ZS2) vier Stufen, der erste Frequenzteiler (TT3) ein Teilungsverhältnis von 4 : 1 sowie der zweite Frequenzteiler (TT4) ein Teilungsverhältnis von 3 : 1 hat und die Frequenz des Schrittaktsignals (T21) des umcodierten Signals und damit die Schwingfrequenz des Generators (G2) drei Viertel der Frequenz des Schrittaktsignals (T11) des umzucodierenden Signals (S1) entspricht (Fig. 4).

6. Anordnung nach Patentanspruch 4, dadurch gekennzeichnet, dass für eine 4B/3T-Decodierung der Serien-Parallel-Wandler (SP3) sechs Stufen, der Parallel-Serien-Wandler (PS3) vier Stufen, der Zwischenspeicher (ZS3) vier Stufen, der erste Frequenzteiler (TT5) ein Teilerverhältnis von 3 : 1 und der zweite Frequenzteiler (TT6) ein Teilerverhältnis von 4 : 1 hat und die Frequenz des Schrittaktsignals (T41) des umcodierten Signals (S3) und damit die Schwingfrequenz des Generators (G3) vier Drittel der Frequenz des Schrittaktsignals (T31) des umzucodierenden Signals (S2') ist (Fig. 5).

**Claims**

1. Method for reducing jitter during the blockwise code-conversion of digital signals, wherein the signals which are to be code-converted are converted into signal blocks by means of series-parallel conversion, the signal blocks are code-converted and the code-converted signal blocks are output following parallel-series conversion, wherein storage is provided and wherein the series-parallel conversion is controlled by a first word clock pulse signal of the signal to be code-converted and the parallel-series conversion is controlled by a second word clock pulse signal which is derived from the first, characterised in that between the series-parallel and the parallel-series conversion, in addition to the code-conversion, an intermediate storage of the signal blocks is carried out with a word clock pulse signal which, in the event that the intermediate storage takes place before the code-conversion corresponds to the second derived word clock pulse signal (TW2, T2, T4), and in the event that the intermediate storage takes place following the code-conversion corresponds to the word clock pulse signal (TW1, T1, T3) of the signals (S1) to be code-converted and that the derived word clock pulse signal (TW2, T2, T4) is produced by means of a high Q-factor phase locked loop which contains a phase discriminator (PD1, PD2, PD3) and a generator (G1, G2, G3).

2. Method as claimed in claim 1, characterised in that the shorter signal block is intermediately stored.

3. Method as claimed in claim 1 or 2, characterised in that the signals (S1) are converted in accordance with a 4B/3T-code rule, where the binary signals are intermediately stored and the ternary signals are split into two unipolar signal flows.

4. Arrangement for the performance of the method claimed in claims 1 to 3 for an An/Bm-code-conversion of a digital signal, characterised in that an input-end series-parallel converter (SP1) is provided with an input for the signal (S1) which is to be code-converted, with an input for the element clock pulse signal (TS1) thereof, with an input for the word clock pulse signal (TW1) thereof, and with n parallel outputs, that these outputs are connected to n parallel inputs of an intermediate store (ZS1) whose n parallel outputs are connected to n parallel inputs of a code-conversion logic (UL), that the code-conversion logic contains m parallel outputs which are connected to the corresponding number of parallel inputs of a parallel-series converter (PS1) from whose output the code-converted and jitter-reduced signal (S2) can be obtained, that the word clock pulse signal (TW1) is derived by means of a first frequency divider (TT1) from the element clock pulse signal (TS1) of the signal which is to be code-converted, and is additionally supplied to a phase discriminator (PD1) whose control output is connected to the control input of a clock pulse generator (G1) whose output is connected to an input of the parallel-series converter (PS1) for the element clock pulse signal (TS2) of the code-converted signal (S2) and to a second frequency divider (TT2) whose output is connected to the input of the parallel-series converter (PS1) for the word clock pulse signal (TW2) of the code-converted signal (S2), the input of the phase discriminator (PD1) for the comparison signal, and the clock pulse input of the intermediate store (ZS1) (Fig. 2).

5. Arrangement as claimed in claim 4, characterised in that for a 4B/3T-code-conversion, the input-end series-parallel converter (SP2) has four stages, the output-end parallel-series converter (PS2) has six stages, the intermediate store (ZS2) has four stages, the first frequency divider (TT3) has a division ratio of 4 : 1, and the second frequency divider (TT4) has a division ratio of 3 : 1, and the frequency of the element clock pulse signal (T21) of the code-converted signal and thus the oscillating frequency of the generator (G2) corresponds to three quarters of the frequency of the element clock pulse signal (T11) of the signal (S1) which is to be code-converted (Fig. 4).

6. Arrangement as claimed in claim 4, characterised in that for a 4B/3T-code-conversion, the series-parallel converter (SP3) has six stages, the parallel-series converter (PS3) has four stages, the intermediate store (SZ3) has four stages, the first frequency divider (TT5) has a divider ratio of 3 : 1 whereas the second frequency divider (TT6) has a divider ratio of 4 : 1 and the frequency of the element clock pulse signal (T41) of the code-converted signal (S3) and thus the oscillating frequency of the generator (G3) amounts to four thirds of the frequency of the element clock pulse signal (T31) of the signal (S2') which is to be code-converted (Fig. 5).

**Revendications**

1. Procédé pour la réduction du vacillement lors du transcodage par blocs de signaux numériques, suivant lequel les signaux devant être transcodés sont convertis en blocs de signaux au moyen d'une conversion série-parallèle, ceux-ci sont transcodés et les blocs de signaux transcodés sont délivrés après une conversion parallèle-série, suivant lequel une mémorisation a lieu et suivant lequel la conversion série-parallèle est commandée par une première cadence de mots du signal devant être transcodé et la conversion parallèle-série est commandée par une seconde cadence de mots qui est dérivée de la première, caractérisé par le fait qu'entre la conversion série-parallèle et la conversion parallèle-série a lieu, en plus du transcodage, une mémorisation intermédiaire des blocs de signaux avec une cadence de mots qui, dans le cas à la mémorisation intermédiaire a lieu avant le transcodage, correspond à la seconde cadence de mots dérivée (TW2, T2, T4) et, dans le cas où la mémorisation intermédiaire a lieu après le transcodage, correspond à la cadence de mots (TW1, T1, T3) des signaux devant être transcodés (S1), et que la cadence de mots dérivée (TW2, T2, T4) est produit au moyen d'une boucle de régulation de phase de haute qualité qui comprend un discriminateur de phase (PD1, PD2, PD3) et un générateur (G1, G2, G3).

2. Procédé suivant la revendication 1, caractérisé par le fait que le bloc de signaux le plus court est mémorisé temporairement.

3. Procédé suivant la revendication 1 ou 2, caractérisé par le fait que les signaux (S1) sont convertis en correspondance avec une règle de codage 4B/3T, et que, ce faisant, les signaux binaires sont mémorisés temporairement et les signaux ternaires sont subdivisés en deux courants de signaux unipolaires.

4. Dispositif pour la mise en œuvre du procédé suivant les revendications 1 à 3, pour un transcodage An/Bm d'un signal numérique, caractérisé par le fait qu'il est prévu un convertisseur série-parallèle (SP1) côté entrée qui comporte un entrée pour le signal (S1) devant être transcodé, une entrée pour son signal de cadence pas-à-pas (TS1), une entrée pour son signal de cadence de mots (TW1) et n sorties parallèles, que ces sorties sont reliées à n entrées parallèles d'une mémoire intermédiaire (ZS1) aux n sorties parallèles duquel sont reliées n entrées parallèles d'un circuit logique de transcodage (UL), que le circuit logique de transcodage possède m sorties parallèles auxquelles est relié le nombre correspondant d'entrées parallèles d'un convertisseur parallèle-série (PS1) à la sortie duquel peut être prélevé le signal (S2) transcodé et dont le vacillement est réduit, qu'à partir du signal de cadence pas-à-pas (TS1) du signal devant être transcodé, au moyen d'un premier diviseur de fréquence (TT1), est dérivé le signal de cadence de mots (TW1), qui est appliqué en plus à un discriminateur de phase (PD1) à la sortie de commande duquel est reliée l'entrée de commande d'un générateur de cadence (G1) dont la sortie est reliée à une entrée du convertisseur parallèle-série (PS1) pour le signal de cadence pas-à-pas (TS2) du signal transcodé (S2) et à un second diviseur de fréquence (TT2) à la sortie duquel sont reliées l'entrée du convertisseur parallèle-série (PS1) pour le signal de cadence de mots (TW2) du signal transcodé (S2), l'entrée du discriminateur de phase (PD1) pour le signal de comparaison et l'entrée de cadence de la mémoire intermédiaire (ZS1) (fig. 2).

5. Dispositif suivant la revendication 4, caractérisé par le fait que pour un codage 4B/3T, le convertisseur série-parallèle (SP2) côté entrée comporte quatre étages, le convertisseur parallèle-série (PS2) côté sortie comporte six étages, la mémoire intermédiaire (ZS2) comporte quatre étages, le diviseur de fréquence (TT3) possède un rapport de division de 4 : 1 et le second diviseur de fréquence (TT4) possède un rapport de division de 3 : 1, et la fréquence du signal de cadence pas-à-pas (T21) du signal transcodé et par conséquent la fréquence d'oscillation du générateur (G2) correspond à trois quarts de la fréquence du signal de cadence pas-à-pas (T11) du signal (S1) devant être transcodé (fig. 4).

6. Dispositif suivant la revendication 4, caractérisé par le fait que pour un décodage 4B/3T, le convertisseur série-parallèle (SP3) comporte six étages, le convertisseur parallèle-série (PS3) comporte quatre étages, la mémoire intermédiaire (ZS3) comporte quatre étages, le premier diviseur de fréquence (TT5) possède un rapport de division de 3 : 1 et le second diviseur de fréquence (TT6) possède un rapport de division de 4 : 1, et la fréquence du signal de cadence pas-à-pas (T41) du signal transcodé (S3) et par conséquent la fréquence d'oscillation du générateur (G3) est égale à quatre tiers de la fréquence du signal de cadence pas-à-pas (T31) du signal (S2') devant être transcodé (fig. 5).

## FIG 1

## FIG 2

# FIG 3

TS1

TW1

TW2

TS2

# FIG 4

# FIG 5